# EUROPÄISCHE PATENTSCHRIFT

(11) **EP 2 804 276 B1**
(45) Veröffentlichungstag und Bekanntmachung des Hinweises auf die Patenterteilung: **02.05.2018**
(21) Anmeldenummer: 14001084.4
(22) Anmeldetag: 24.03.2014
(51) Int. Cl.: H02G 3/12

(54) **Elektrisches Installationsgerät mit Beschriftungselement sowie Programmiergerät zur Programmierung eines derartigen Beschriftungselements**
Electric installation device with labelling element and programming device for programming such a labelling element
Appareil d'installation électrique avec signalétique et appareil de programmation pour la programmation d'une telle signalétique

(30) Priorität: 13.05.2013 DE 102013008042
(43) Veröffentlichungstag der Anmeldung: 19.11.2014
(73) Patentinhaber: ABB AG, 68309 Mannheim (DE)
(72) Erfinder: Schallenberg, Wolfgang, 40599 Düsseldorf (DE); Wieske, Stefan, 58285 Gevelsberg (DE); Lehnert, Christian, 58239 Schwerte (DE); Fröhling, Marcel, 58579 Schalsmühle (DE); Krummel, Holger, 58515 Lüdenscheid (DE)

(56) Entgegenhaltungen:
- EP-A1- 2 306 440
- WO-A2-2004/086338
- DE-A1-102010 047 322
- US-A1- 2010 261 321
- US-A1- 2012 286 264

## Beschreibung

Die Erfindung betrifft ein elektrisches Installationsgerät mit Beschriftungselement sowie ein Programmiergerät zur Programmierung eines derartigen Beschriftungselements.

Aus der DE 10 2007 008 625 B4 ist ein Unterputz-Installationsgerät zur Informationsdarstellung mit einem Gerätesockel bekannt, welcher über Anschlussklemmen an ein Netz anschließbar ist, wobei ein von einer LED-Ansteuervorrichtung angesteuertes LED-Anzeigeleuchtfeld am Gerätesockel angeschlossen ist, in welchem ein LED-Symbol zur Anzeige gelangt, welches in einem nichtflüchtigen Speicher abgespeichert ist. Das LED-Anzeigefeld befindet sich innerhalb einer als Betätigungswippe dienenden Wippe, welche als schwimmende Wippe ausgebildet ist, deren Kanten als oberer, unterer, linker Betätigungsabschnitt und rechter Betätigungsabschnitt zur Beaufschlagung von vier separaten, am Gerätesockel befestigten Mikrotastern dienen. Mittels einer dem nichtflüchtigen Speicher zugeordneten Verarbeitungseinheit erfolgt eine Auswahl eines bestimmten LED-Symbols aus einer Vielzahl abgespeicherter LED-Symbole.

Aus der DE 10 2007 019 505 A1 ist ein Installationsgerät mit OLED-Leuchtmitteln bekannt, wobei ein steuerbares OLED-Display gleichzeitig als Bedientaste und Anzeigeeinheit fungiert und ein dem OLED-Leuchtmittel zugeordneter Ansteuerbaustein über einen Bus mit einem Basisgerät verbunden ist.
Aus der DE 10 2008 031 767 B4 ist ein elektrisches Unterputz-Installationsgerät bekannt, in welchem ein Geräteeinsatz installiert ist und welcher mindestens ein Beschriftungsfeld aufweist. Die Beleuchtung des Beschriftungsfeldes erfolgt unter Einsatz einer in einem Abdeckrahmen eingebauten Lichtquelle unter Verwendung einer einen Primärkreis und einen Sekundärkreis aufweisenden induktiven Energieübertragungseinrichtung.
Der Erfindung liegt die Aufgabe zugrunde, ein optimiertes elektrisches Installationsgerät mit Beschriftungselement anzugeben.
Des Weiteren soll ein Programmiergerät zur Programmierung eines derartigen Beschriftungselements angegeben werden.
Diese Aufgabe wird hinsichtlich des Beschriftungselements erfindungsgemäß gelöst durch Installationsgerät gemäss Anspruch 1, Die mit der Erfindung erzielbaren Vorteile liegen insbesondere darin, dass das Beschriftungselement hinsichtlich Energiebedarf und Kommunikationsbedarf vollkommen autark ist und dementsprechend über keinerlei elektro-mechanische Schnittstellen / Schnittstellen-Kontakte verfügen muss. Das Beschriftungsfeld ist universell sowohl für mechanische Installationsgeräte ohne eigene Spannungsversorgung (für die Ansteuerung) als auch in elektronischen Installationsgeräten einsetzbar ist, wobei auch hier keinerlei Spannungskontaktierungs-Notwendigkeit hinsichtlich der Energieversorgung besteht. Das Beschriftungselement ist sowohl für den Nachrüstungs- und Renovierungsmarkt als auch für die Sortimentserweiterung eines existierenden Unterputz- oder Aufputz-Installationsgeräteprogramms bestens geeignet, ohne dass dabei die Notwendigkeit einer Neugestaltung oder Neuentwicklung der Zentralscheibe des Installationsgerätes oder des Abdeckrahmens besteht. Vorteilhaft kann die Beschriftungsmöglichkeit auch dazu genutzt werden, Farbgebung und Muster von Wippe und/oder Rahmen zu gestalten. Des Weiteren ist auch eine vollständig feste Integration in ein Installationsgerät realisierbar.
Dabei kann die kabellose Standard-Schnittstelle
- durch die Solar-Folie selbst gebildet sein und die Programmierung der Anzeige erfolgt mittels der Solar-Folie über ein Programmiergerät zugeführter Lichtimpulse,
- durch mindestens eine Fotodiode gebildet sein und die Programmierung der Anzeige erfolgt mittels der Foto-Diode über ein Programmiergerät zugeführter Lichtimpulse,
- durch mindestens einen lichtabhängigen Widerstand gebildet sein und die Programmierung der Anzeige erfolgt mittels dem lichtabhängigen Widerstand über ein Programmiergerät zugeführter Lichtimpulse,
- durch eine RFID-Folie gebildet sein und die Programmierung der Anzeige erfolgt mittels der RFID-Folie über ein Programmiergerät zugeführter Funksignale.
Erfindungsgemäss weist das Beschriftungselement einen Kunststoffträger auf, welcher mit den Folien verbunden ist. Hierdurch wird die Stabilität des Beschriftungselements insgesamt erhöht. Erfindungsgemäss muss das Beschriftungselement in einer Ausnehmung der Zentralscheibe montiert sein. Dies erleichtert die Montage und Demontage des Beschriftungselements.

Die Aufgabe wird hinsichtlich des Programmiergeräts erfindungsgemäß gelöst durch ein Programmiergerät zur Programmierung eines Beschriftungselements eines elektrischen Installationsgerätes, wobei das Programmiergerät neben einer Steuerlogik / Auswertung / Verarbeitung über eine zur kabellosen Standard-Schnittstelle des Beschriftungselements korrespondierende kabellose Schnittstelle verfügt.

Vorteilhaft kann das Programmiergerät in Form eines Standardgerätes zur Programmierung, wie PC oder Tablett oder Smartphone ausgebildet sein.

Die Erfindung wird nachstehend an Hand der in der Zeichnung dargestellten Ausführungsbeispiele erläutert. Es zeigen:
- Fig. 1: eine perspektivische Sicht auf eine Zentralscheibe eines elektrischen Installationsgerätes,
- Fig. 2: einen Schnitt durch eine Zentralscheibe eines elektrischen Installationsgerätes,
- Fig. 3: eine perspektivische Sicht auf die Vorderseite eines Beschriftungselements,
- Fig. 4: eine perspektivische Sicht auf eine Zentralscheibe eines elektrischen Installationsgerätes mit entnommenem Beschriftungselement,
- Fig. 5: ein Beschriftungselement mit seinen Komponenten in perspektivischer Sicht auf die Rückseite,
- Fig. 6: den Aufbau eines Beschriftungselements im Detail und im Schnitt,
- Fig. 7: eine schematische Darstellung eines elektrischen Installationsgeräts mit mehreren Beschriftungselementen,
- Fig. 8: eine schematische Darstellung einer ersten Variante der Programmierung mindestens eines Beschriftungselements,
- Fig. 9: eine schematische Darstellung einer zweiten Variante der Programmierung mindestens eines Beschriftungselements.

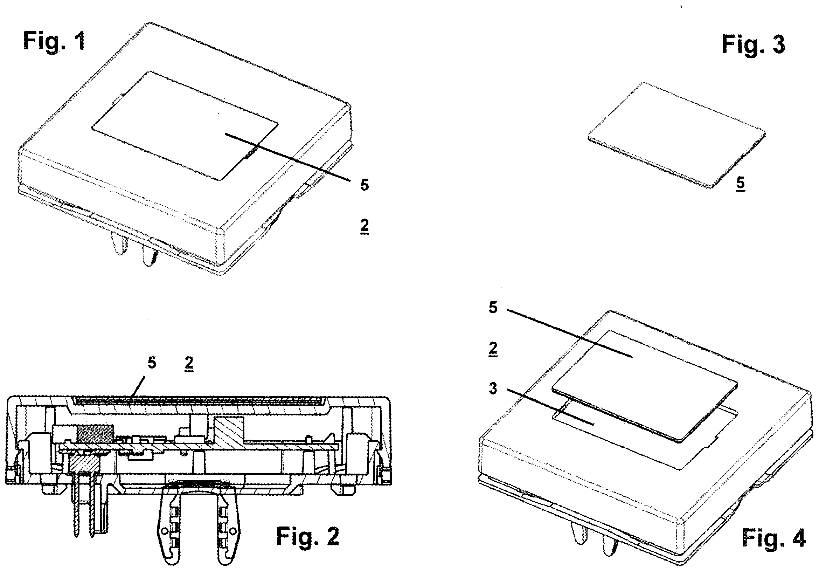

In Fig. 1 ist eine perspektivische Sicht auf eine Zentralscheibe eines elektrischen Installationsgerätes dargestellt. Im Zentrum der Zentralscheibe 2 ist mindestens ein Beschriftungselement 5 angeordnet und befestigt. Die Zentralscheibe 2 wird auf einen Geräteeinsatz, insbesondere auf einen für die Montage in eine handelsübliche UP-Gerätedose geeigneten Gerätesockel eines Unterputz-Installationsgerätes aufgesteckt. Ein Abdeckrahmen komplettiert das betrachtete elektrische Installationsgerät.

In Fig. 2 ist ein Schnitt durch eine Zentralscheibe eines elektrischen Installationsgerätes dargestellt. An der Frontseite der Zentralscheibe 2 befindet sich das Beschriftungselement 5. An der Rückseite der Zentralscheibe 2 sind ein Anschlussstecker für die Kontaktierung mit einem entsprechend ausgebildeten Steckkontakt des Gerätesockels und mechanische Befestigungselemente für die Arretierung auf dem Gerätesockel zu erkennen.

In Fig. 3 ist eine perspektivische Sicht auf die Vorderseite eines Beschriftungselements 5 dargestellt. Die Beschriftungselemente sind jeweils plattenförmig ausgebildet. Das Beschriftungselement dient zur Darstellung von statischen Informationen, wie Text und Grafik.

In Fig. 4 ist eine perspektivische Sicht auf eine Zentralscheibe eines elektrischen Installationsgerätes mit entnommenem Beschriftungselement dargestellt. Infolge des Abhebens des Beschriftungselements 5 von der Zentralscheibe 2 ist eine im Zentrum der Zentralscheibe 2 befindliche Ausnehmung 3 erkennbar, in welche das Beschriftungselement 5 eingeführt, vorzugsweise "eingeklippst" werden kann.

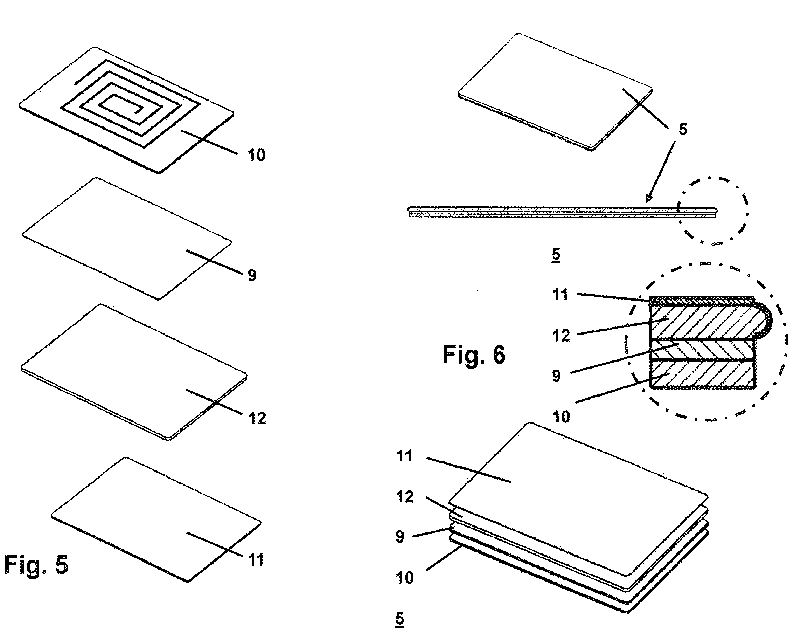

In Fig. 5 sind die Komponenten eines Beschriftungselements in perspektivischer Sicht auf die Rückseite dargestellt. Das Beschriftungselement 5 besteht aus den folgenden, schichtweise angeordneten und miteinander verbundenen Komponenten:
- optional einer RFID-Folie 10 (Radio Frequency Identification),
- einer Electronic Paper Display-Folie, kurz EPD-Folie 9 (elektronisches Papier, e-paper)
- optional einem klarsichtigen Kunststoffträger 12,
- einer klarsichtigen Solar-Folie 11.

In Fig. 6 ist der Aufbau eines Beschriftungselements im Detail und im Schnitt dargestellt. Im oberen Bildbereich sind eine perspektivische Sicht auf die Frontseite eines fertiggestellten Beschriftungselements 5 sowie ein Schnitt durch ein Beschriftungselement gezeigt, wobei im Schnitt ein Detail skizziert ist (siehe den strichpunktierten Kreis), welches im mittleren Bildbereich in vergrößerter Darstellung gezeigt ist und den Schichtaufbau des Beschriftungselements 5 darstellt, mit
- der Solar-Folie 11 als obere Schicht,
- dem optionalen Kunststoffträger 12 welcher insbesondere die mechanische Stabilität / Steifigkeit des Beschriftungselements erhöht,
- der EPD-Folie 9,
- optional der RFID-Folie 10 als untere Schicht.

Im unteren Bildbereich der Fig. 6 ist der sandwichartige Schichtaufbau mit Solar-Folie 11 / Kunststoffträger 12 / EPD-Folie 9 / RFID-Folie 10 nochmals detailliert gezeigt. Der klarsichtige Kunststoffträger 12 und die drei Folien 9, 10, 11 werden miteinander durch Kleben, Umspritzen usw. verbunden.

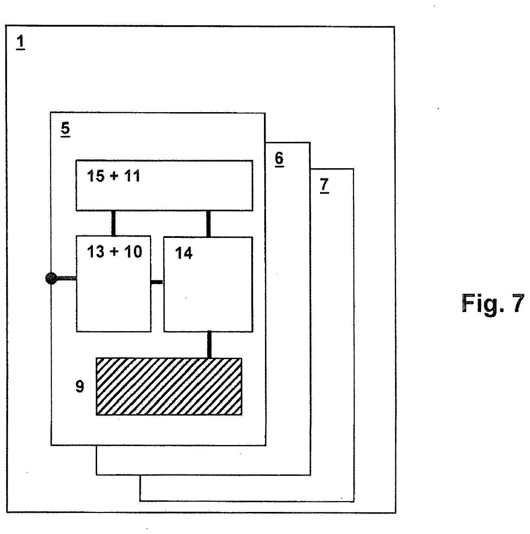

In Fig. 7 ist eine schematische Darstellung eines elektrischen Installationsgeräts mit mehreren Beschriftungselementen dargestellt. Jedes der skizzierten Beschriftungselemente 5, 6, 7 des elektrischen Installationsgeräts 1 ist gleichartig aufgebaut und weist auf:
- eine kabellose Standard-Schnittstelle 13,
- eine mit der kabellose Standard-Schnittstelle 13 verbundene Steuerlogik / Auswertung / Verarbeitung 14,
- eine mit der Steuerlogik / Auswertung / Verarbeitung 14 verbundene EPD-Folie 9,
- einen mit der kabellosen Standard-Schnittstelle 13 und der Steuerlogik / Auswertung / Verarbeitung 14 verbundenen Energie-Konverter 15 inklusive Solar-Folie 11 und Speicherelement (Akkumulator).

Nachfolgend einige allgemeinen Erläuterungen hinsichtlich des vorstehend behandelten Beschriftungselements 5-7:
Der vorgeschlagenen Idee liegt im allgemeinen Sinne die frei veränderbare Beschriftungsmöglichkeit insbesondere von "mechanischen" Installationsgeräten 1 zu Grunde. Da diese "mechanischen" Installationsgeräte 1 im Gegensatz zu elektronischen Installationsgeräten über keine eigene Spannungsversorgung für die Ansteuerung verfügen, ist eine Beschriftungsmöglichkeit mit Hilfe von EPD-Folien angedacht. Diese Beschriftungsmöglichkeit kann bei entsprechendem Aufbau darüber hinaus auch dazu genutzt werden, Farbgebung und Muster von Wippe und/oder Rahmen veränderlich zu gestalten.

Die Vorteile liegen:
- in der Flexibilität der Beschriftung: frei programmierbar, vorgehaltene Segmente, Vorlagen, wobei neben der reinen Text- oder Zeichendarstellung ebenfalls die Möglichkeit der Farbgebung und Mustergestaltung gegeben ist,
- in der Unabhängigkeit der Informationserhaltung: es ist keine externe Versorgungsspannung erforderlich,
- in der Formgestaltung: flexible Folie, welche sich unterschiedlichen Konturen anpassen kann,
- in der Lesbarkeit: keine Hinterleuchtung erforderlich, reflektiv,
- in der Widerstandsfähigkeit gegen Eindringen von Staub und Feuchtigkeit: geschlossen im Installationsgerät verbaut,
- in der einfachen, kontaktlosen Umgestaltung der Information (Beschriftung, Farbe, Muster) durch Programmierung auch nach bereits abgeschlossener Geräteinstallation.

Nachstehende Umsetzungsvarianten beschreiben mögliche Beschriftungselemente 5
- 7:
   A) Beschriftungselement 5 - 7 mit kabelloser Standard-Schnittstelle 13 (mechanisch und elektrisch) zur Kontaktierung der EPD-Folie 9 zwecks Leistungsübertragung und Programmierung mit Hilfe eines Programmiergerätes, beispielsweise durch RFID/NFC:
      - Hierbei liegt die hierzu notwendige Spule (RFID-Folie) hinter der EPD-Folie 9 bzw. ist direkt auf die Rückseite der EPD-Folie 9 gedruckt, um Platz und Kosten einzusparen.
      - Alternativ ist auch eine alternative Anordnung des Folienaufbaus Kunststoffträger 12 / EPD-Folie 9, RFID/NFC Schnittstelle / Spule realisierbar: EPD-Folie 9 und Spule (RFID-Folie) können auch versetzt zueinander angeordnet werden.
   B) Beschriftungselement 5 - 7 mit kabelloser Standard-Schnittstelle 13 (mechanisch und elektrisch) zur Kontaktierung der EPD-Folie 9 zwecks Leistungsübertragung und Programmierung mit Hilfe eines Programmiergerätes mittels Lichtimpulsen über die Solar-Folie 11: bei dieser Variante wird einerseits die EPD-Folie 9 mittels der Solar-Folie 11 mit Energie versorgt und andererseits gleichzeitig mit neuer, die Programmierung der Anzeige betreffende Information programmiert:
      - Direkte Programmierung der Beschriftung durch die Verwendung von ultradünner, transparenter Solar-Folie 11 (Organische Photovoltaik, 1 mm Dicke). Die Transparenz der Solar-Folien 11 liegt beispielsweise bei ca. 40 - 50% und lässt sich weiter steigern, so dass somit eine Beschichtung der EPD-Folie mit der Solar-Folie zur direkten Programmierung ermöglicht wird, während die EPD-Folie weiterhin ablesbar ist.
      - Alternativ ist auch eine andere Anordnung des Folienaufbaus Kunststoffträger 12 / Solar-Folie 11/EPD-Folie 9 realisierbar: beispielsweise ist die Solar-Folie 11 hinter einer transluzenten EPD-Folie 9 angeordnet. Solar-Folie 11 und EPD-Folie 9 können auch gegeneinander versetzt angeordnet werden.
   C) Alternativ kann die Energieerzeugung über die Solar-Folie 11 erfolgen, während die Programmierung mittels Lichtimpulsen mit Hilfe eines Programmiergerätes über Fotodioden oder lichtabhängige Widerstände erfolgt, welche zusätzliche Bauteile des Beschriftungselements sind.
   D) Alternativ kann die Solar-Folie 11 auch kombiniert mit der kabellosen Standard-Schnittstelle - beispielsweise RFID/NFC - eingesetzt werden, um eine Leistungserhöhung zu erreichen.

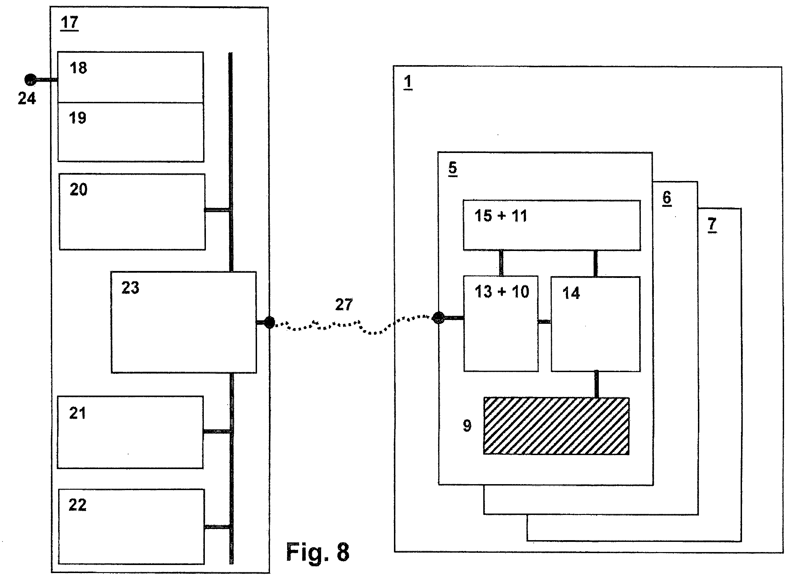

In Fig. 8 ist eine schematische Darstellung einer ersten Variante der Programmierung mindestens eines Beschriftungselements dargestellt. Vorteilhaft muss das Beschriftungselement 5, 6, 7 nicht aus dem Installationsgerät 1 entnommen werden, bevor eine externe Programmierung erfolgen kann. Der rechte Bildbereich der Figur 8 zeigt das unter Figur 7 erläuterte elektrische Installationsgerät 1, während im linken Bildbereich ein für die Programmierung des mindestens einen Beschriftungselements 5 - 7 dienendes Programmiergerät 17 gezeigt ist. Das Programmiergerät 17 besitzt eine kabellose Standard-Schnittstelle 23, welche während der Programmierung beispielsweise über eine Funkstrecke 27 oder Lichtstrecke mit der kabellosen Standard-Schnittstelle 13 des Beschriftungselements 5 - 7 kommuniziert, um derart eine Programmierung der Anzeige durchzuführen. Das Programmiergerät 17 kann für seine Energieversorgung entweder eine Batterie 19 aufweisen oder über ein Netzteil 18 mit einer externen Spannungsversorgung 24 verbunden sein. Die erwähnte kabellose Standard-Schnittstelle 23 des Programmiergeräts 17 ist mit einer Steuerlogik / Auswertung / Verarbeitung 20, mit einer Anzeigeeinheit 21 zur Visualisierung von Daten (Text, Grafik) und mit einem Bedienelement 22, wie Taster oder Touchscreen verbunden.

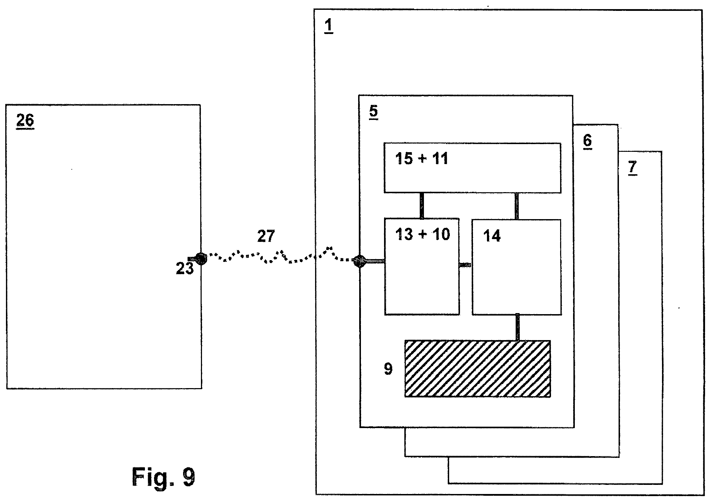

In Fig. 9 ist eine schematische Darstellung einer zweiten Variante der Programmierung mindestens eines Beschriftungselements dargestellt. Vorteilhaft muss das Beschriftungselement 5, 6, 7 nicht aus dem Installationsgerät 1 entnommen werden, bevor eine externe Programmierung erfolgen kann. Der rechte Bildbereich der Figur 8 zeigt das unter Figur 7 erläuterte elektrische Installationsgerät 1, während im linken Bildbereich ein für die Programmierung des mindestens einen Beschriftungselements 5 - 7 dienendes Standardgerät 26 zur Programmierung gezeigt ist, welches beispielsweise als PC, Tablett oder Smartphone ausgebildet ist und eine kabellose Standard-Schnittstelle 23 aufweist, um derart beispielsweise über die Funkstrecke 27 oder Lichtstrecke die Programmierung, d. h. die Eingabe von statischen Informationen (Text, Grafik) vorzunehmen.

In den vorstehend erläuterten Ausführungsbeispielen erfolgt die angesprochene Funk-Kommunikation über die Funkstrecke 27 vorzugweise gemäß
- RFID-Standards oder
- NFC (Near Field Communication) - Standards (ISO/IEC 15693) oder
- Bluetooth-Standards.

### Bezugszeichenliste

- 1: Elektrisches Installationsgerät
- 2: Zentralscheibe
- 3: Ausnehmung
- 4: -
- 5: Beschriftungselement
- 6: Beschriftungselement
- 7: Beschriftungselement
- 8: -
- 9: EPD-Folie (Electronic Paper Display, elektronisches Papier, e-paper)
- 10: RFID-Folie (Radio Frequency Identification)
- 11: Solar-Folie (klarsichtig)
- 12: Kunststoffträger (klarsichtig)
- 13: Kabellose Standard-Schnittstelle
- 14: Steuerlogik / Auswertung / Verarbeitung
- 15: Energie-Konverter
- 16: -
- 17: Programmiergerät
- 18: Netzteil
- 19: Batterie
- 20: Steuerlogik / Auswertung / Verarbeitung
- 21: Anzeigeeinheit
- 22: Bedienelement
- 23: Kabellose Standard-Schnittstelle
- 24: Externe Spannungsversorgung
- 25: -
- 26: Standardgerät zur Programmierung (PC, Tablett, Smartphone)
- 27: Funkstrecke oder Lichtstrecke

## Patentansprüche

1. Instailationsgerät (1) ohne eigene Spannungsversorgung für seine Ansteuerung mit Geräteeinsatz, darauf aufzubringender Zentralscheibe (2) und Abdeckrahmen,
• wobei mindestens ein plattenförmig ausgebildetes und zur Darstellung von statischen Informationen, wie Text und Grafik dienendes Beschriftungselement (5, 6, 7) in einer Ausnehmung (3) der Zentralscheibe (2) angeordnet ist,
• wobei das Beschriftungselement (5, 6, 7) eine Electronic Paper Display-Folie (9) aufweist,
• wobei das Beschriftungselement (5, 6, 7) eine Steuerlogik / Auswertung / Verarbeitung (14) aufweist,
• wobei das Beschriftungselement (5, 6, 7) eine Solar-Folie (11) zur Erzeugung der für den Betrieb der EPD-Folie (9) mit Steuerlogik / Auswertung Verarbeitung (14) erforderlichen Energie aufweist,
• wobei das Beschriftungselement (5, 6, 7) eine kabellose Standard-Schnittstelle (13) zur Programmierung der Anzeige aufweist, die mit der Steuerlogik/Auswertung /Verarbeitung 14 verbunden ist und
• wobei das Beschriftungselement 5, 6, 7) einen Kunststoffträger (12) aufweist, welcher mit den Folien verbunden ist.

2. Installationsgerät (1) nach Anspruch 1, **dadurch gekennzeichnet, dass** die kabellose Standard-Schnittstelle (13) durch die Solar-Folie (11) selbst gebildet ist und die Programmierung der Anzeige mittels der Solar-Folie (11) zugeführter Lichtimpulse erfolgt.

3. Installationsgerät (1) nach Anspruch 1, **dadurch gekennzeichnet, dass** die kabellose Standard-Schnittstelle (13) durch mindestens eine Fotodiode gebildet ist und die Programmierung der Anzeige mittels der Foto-Diode zugeführter Lichtimpulse erfolgt.

4. Installationsgerät (1) nach Anspruch 1, **dadurch gekennzeichnet, dass** die kabellose Standard-Schnittstelle (13) durch mindestens einen lichtabhängigen Widerstand gebildet ist und die Programmierung der Anzeige mittels dem lichtabhängigen Widerstand zugeführter Lichtimpulse erfolgt.

5. Installationsgerät (1) nach Anspruch 1, **dadurch gekennzeichnet, dass** die kabellose Standard-Schnittstelle (13) durch eine RFID-Folie (10) gebildet ist und die Programmierung der Anzeige mittels der RFID-Folie (10) zugeführter Funksignale erfolgt.

6. Programmiergerät (17) zur Programmierung eines Beschriftungselements (5, 6, 7) eines Installationsgerätes (1) nach mindestens einem der vorstehenden Ansprüche, **dadurch gekennzeichnet, dass** es neben einer Steuerlogik/Auswertung/Verarbeitung (20) über eine zur kabellose Standard-Schnittstelle (13) des Beschriftungselements (5, 6, 7) korrespondierende kabellose Standard-Schnittstelle (23) verfügt.

7. Programmiergerät nach Anspruch 6, **gekennzeichnet durch** eine Ausbildung in Form eines Standardgerätes zur Programmierung, wie PC oder Tablett oder Smartphone.

## Claims

1. Installation device (1) without its own power supply for the actuation thereof, having a device insert, a central plate (2) to be applied thereto and a covering frame,
• at least one labelling element (5, 6, 7) of plate-shaped design and used to present static information such as text and graphics being arranged in a recess (3) in the central plate (2),
• the labelling element (5, 6, 7) having an electronic paper display film (9),
• the labelling element (5, 6, 7) having a control logic system/evaluation system/processing system (14),
• the labelling element (5, 6, 7) having a solar film (11) for generating the energy required for the operation of the EPD film (9) with the control logic system/evaluation system/processing system (14),
• the labelling element (5, 6, 7) having a wireless standard interface (13) for programming the display, said interface being connected to the control logic system/evaluation system/processing system (14), and
• the labelling element (5, 6, 7) having a plastic support (12) connected to the films.

2. Installation device (1) according to Claim 1, **characterized in that** the wireless standard interface (13) is itself formed by the solar film (11) and the display is programmed by means of light pulses supplied to the solar film (11).

3. Installation device (1) according to Claim 1, **characterized in that** the wireless standard interface (13) is formed by at least one photodiode and the display is programmed by means of light pulses supplied to the photodiode.

4. Installation device (1) according to Claim 1, **characterized in that** the wireless standard interface (13) is formed by at least one light-dependent resistor and the display is programmed by means of light pulses supplied to the light-dependent resistor.

5. Installation device (1) according to Claim 1, **characterized in that** the wireless standard interface (13) is formed by an RFID film (10) and the display is programmed by means of radio signals supplied to the RFID film (10).

6. Programming device (17) for programming a labelling element (5, 6, 7) of an installation device (1) according to at least one of the preceding claims, **characterized in that**, in addition to a control logic system/evaluation system/processing system (20), said programming device has a wireless standard interface (23) corresponding to the wireless standard interface (13) of the labelling element (5, 6, 7).

7. Programming device according to Claim 6, **characterized by** a design in the form of a standard device for programming, such as a PC or tablet or smartphone.

## Revendications

1. Appareil d'installation (1) sans alimentation électrique propre pour sa commande, comportant un insert d'appareil, un disque central (2) à monter sur celui-ci et un châssis de protection,
• dans lequel au moins un élément de marquage (5, 6, 7) sous la forme d'une plaque et servant à représenter des informations statiques, telles que du texte et des graphiques, est disposé dans un évidement (3) du disque central (2),
• dans lequel l'élément de marquage (5, 6, 7) comporte une feuille d'affichage en papier électronique (9),
• dans lequel l'élément de marquage (5, 6, 7) comporte un système logique de commande/d'évaluation/de traitement (14),
• dans lequel l'élément de marquage (5, 6, 7) comporte une feuille solaire (11) destinée à produire l'énergie nécessaire au fonctionnement de la feuille EPD (9) avec le système logique de commande/d'évaluation/de traitement (14),
• dans lequel l'élément de marquage (5, 6, 7) comporte une interface sans fil standard (13) pour la programmation de l'affichage connecté au système logique de commande/d'évaluation/de traitement (14), et
• dans lequel l'élément de marquage (5, 6, 7) comporte un support en matière plastique (12) qui est relié aux feuilles.

2. Appareil d'installation (1) selon la revendication 1, **caractérisé en ce que** l'interface standard sans fil (13) est constituée par la feuille solaire (11) elle-même et **en ce que** la programmation de l'affichage est effectuée au moyen d'impulsions lumineuses transmises à la feuille solaire (11).

3. Appareil d'installation (1) selon la revendication 1, **caractérisé en ce que** l'interface standard sans fil (13) est constituée d'au moins une photodiode et **en ce que** la programmation de l'affichage est effectuée au moyen d'impulsions lumineuses transmises à la photodiode.

4. Appareil d'installation (1) selon la revendication 1, **caractérisé en ce que** l'interface standard sans fil (13) est constituée d'au moins une résistance photosensible et **en ce que** la programmation de l'affichage est effectuée au moyen d'impulsions lumineuses transmises à la résistance photosensible.

5. Appareil d'installation (1) selon la revendication 1, **caractérisé en ce que** l'interface standard sans fil (13) est constituée d'une feuille RFID (10) et **en ce que** la programmation de l'affichage est effectuée au moyen de signaux radio transmis à la feuille RFID (10) .

6. Appareil de programmation (17) pour la programmation d'un élément de marquage (5, 6, 7) d'un appareil d'installation (1) selon au moins l'une des revendications précédentes, **caractérisé en ce qu'**en plus d'un système logique de commande/d'évaluation/de traitement (20), il comporte une interface sans fil standard (23) correspondant à l'interface sans fil standard (13) de l'élément de marquage (5, 6, 7).

7. Appareil de programmation selon la revendication 6, **caractérisé en ce qu'**il est réalisé sous la forme d'un appareil standard de programmation, tel qu'un PC, une tablette ou un téléphone intelligent.
